# EUROPEAN PATENT APPLICATION

(11) **EP 4 814 565 A1**
(43) Date of publication of application: **30.09.2026**
(21) Application number: 24919310.3
(22) Date of filing: 25.01.2024
(51) Int. Cl.: G02B 27/01

(54) **NEAR-TO-EYE DISPLAY SYSTEM AND AR GLASSES**

(71) Applicant: SHENZHEN YIWEN TECH LIMITED, Guangdong 518000 (CN)
(72) Inventor: OUYANG, Jian, Shenzhen, Guangdong 518000 (CN)
(74) Representative: Agca Kizil, Tugce
(86) International application number: PCT/CN2024/074030
(87) International publication number: WO 2025/156199

(57) **Abstract**

A near-eye display system (1) and AR glasses (3). The near-eye display system (1) comprises an optical waveguide module (10), an optical engine module (20), and a metalens assembly (22). A first coupling-in grating region (111) and a first coupling-out grating region (112) are formed in the optical waveguide module (10). The optical engine module (20) comprises a light source assembly (21) disposed opposite the first coupling-in grating region (111), and the metalens assembly (22) disposed between the light source assembly (21) and the optical waveguide module (10), wherein the light source assembly (21) is used for outputting an image optical signal to the metalens assembly (22). The metalens assembly (22) comprises a substrate (221) and a metasurface structure (222) on the substrate (221), the metasurface structure (222) configured to receive the image optical signal and diffract the optical signal to the first coupling-in grating region (111).

## Description

### Technical Field

The present application relates to the field of near-eye display devices, and in particular to a near-eye display system and a pair of AR glasses.

### Background

With the advancement of optical display technology, new-generation near-eye display devices such as augmented reality (AR) devices, for example, AR glasses, are gradually emerging. They project virtual display images onto human eyes, enabling users to simultaneously receive information from both the real world and the virtual world.

In most AR devices currently available on the market, a conventional lens group is configured to serve as a lens of an optical engine module. Since the conventional lens group has a large number of lenses, the lens has a large volume and is too heavy, making it difficult for the AR device to meet both the lightweight and the design requirements for high image quality and a large field of view.

### Summary

Embodiments of the present application provide a near-eye display system and a pair of AR glasses, which aim to reduce the volume and weight of a lens of the near-eye display system, thereby reducing the size and weight of an optical engine module and also meeting the design requirements for high image quality and a large field of view.

In a first aspect, an embodiment of the present application provides a near-eye display system including:
an optical waveguide module having a first coupling-in grating region and a first coupling-out grating region, the optical waveguide module configured to receive an optical signal through the first coupling-in grating region, transmit the received optical signal to the first coupling-out grating region, and emit the optical signal from the first coupling-out grating region; and
an optical engine module including a light source assembly disposed opposite the first coupling-in grating region, and a metalens assembly disposed between the light source assembly and the optical waveguide module, where the light source assembly is configured to output an image optical signal to the metalens assembly, the image optical signal including at least two types of optical signals having different attributes, and the attributes of the optical signal including at least one of a wavelength, an emission angle or an emission position;
where the metalens assembly includes at least a substrate and a metasurface structure disposed on the substrate, the metasurface structure is configured to receive the image optical signal and diffract the optical signal of the image optical signal to the first coupling-in grating region, ones of the optical signal having a same emission position have a same diffraction angle.

In some implementations, the near-eye display system has an exit pupil position located opposite the first coupling-in grating region, and the metasurface structure is configured to diffract the optical signal through the exit pupil position to the first coupling-in grating region.

In some implementations, the metasurface structure includes a plurality of metasurface unit groups arranged periodically outward from a center of the substrate.

In some implementations, each of the metasurface unit groups includes a plurality of metasurface units arranged in a ring around the center of the substrate.

In some implementations, each of the metasurface units includes at least one nanopillar protruding from a side of the substrate facing the light source assembly or from a side of the substrate facing the optical waveguide module, the nanopillars on the substrate protruding in the same direction;
where the nanopillar is configured to diffract an optical signal incident on the nanopillar to the first coupling-in grating region.

In some implementations, a height H of the nanopillar protruding in a first direction meets: $H > {λ}_{0} / \left({n}_{1}-{n}_{2}\right)$ where λ₀ represents a wavelength of the optical signal incident on the nanopillar, n₁ represents a refractive index of a material of the nanopillar, and n₂ represents a refractive index of air, the first direction being perpendicular to an extension direction of the substrate.

In some implementations, a diameter D and the height H of the nanopillar meet: D > 60 nm, 300 nm < H < 3 um, and H/D < 20.

In some implementations, the metasurface unit is rectangular, and a length and a width of the metasurface unit are both greater than 100 nm and less than 3000 nm.

In some implementations, the image optical signal includes a first type of optical signals and a second type of optical signals, the first type of optical signals having a different wavelength from the second type of optical signals; and
the optical waveguide module includes at least a first waveguide plate and a second waveguide plate disposed on a side of the first waveguide plate away from the metalens assembly, the first coupling-in grating region and the first coupling-out grating region are disposed in the first waveguide plate, and the second waveguide plate is provided with a second coupling-in grating region and a second coupling-out grating region;
where the first waveguide plate is configured to transmit the first type of optical signals incident on the first coupling-in grating region to the first coupling-out grating region, and diffract the second type of optical signals incident on the first coupling-in grating region to the second coupling-in grating region; and
the second waveguide plate is configured to transmit the second type of optical signals incident on the second coupling-in grating region to the second coupling-out grating region, and diffract the optical signals from the second coupling-out grating region to the first coupling-out grating region, so that the first type of optical signals and the second type of optical signals are combined in the first coupling-out grating region.

In some implementations, the first coupling-in grating region and the second coupling-in grating region are disposed opposite each other in a direction of thickness of the optical waveguide module, and the first coupling-out grating region and the second coupling-out grating region are disposed opposite each other in the direction of thickness of the optical waveguide module.

In some implementations, the metalens assembly includes at least one metalens, where each metalens includes a substrate and a corresponding metasurface structure, and the at least one metalens is arranged separately between the light source assembly and the optical waveguide module.

In some implementations, the near-eye display system further includes at least one unit lens including, a convex lens or a concave lens;
where the at least one unit lens and the at least one metalens are arranged separately between the light source assembly and the optical waveguide module.

In a second aspect, the embodiments of the present application further provide a pair of AR glasses. The AR glasses include a frame module and a near-eye display system according to any of the embodiments of the present application, the near-eye display system being mounted to the frame module.

In some implementations, the frame module includes a frame assembly and a temple assembly connected to the frame assembly;
where the optical waveguide module of the near-eye display system is mounted to the frame assembly, and the optical engine module of the near-eye display system is disposed on a side of the frame assembly close to the temple assembly and corresponding to the first coupling-in grating region of the optical waveguide module.

In some implementations, the near-eye display system further includes a near-eye lens module mounted to the frame assembly and disposed corresponding to the first coupling-out grating region of the optical waveguide module.

In some implementations, the near-eye lens module includes a refractive lens or a plano lens.

In summary, the embodiments of the present application provide a near-eye display system and a pair of AR glasses. The near-eye display system includes: an optical waveguide module having a first coupling-in grating region and a first coupling-out grating region, the optical waveguide module configured to receive an optical signal through the first coupling-in grating region, transmit the received optical signal to the first coupling-out grating region, and emit the optical signal from the first coupling-out grating region; and an optical engine module including a light source assembly disposed opposite the first coupling-in grating region, and a metalens assembly disposed between the light source assembly and the optical waveguide module, where the light source assembly is configured to output an image optical signal to the metalens assembly, the image optical signal including at least two types of optical signals having different attributes, and the attributes of the optical signal including at least one of a wavelength, an emission angle or an emission position; and the metalens assembly includes at least a substrate and a metasurface structure disposed on the substrate, the metasurface structure configured to receive the image optical signal and diffract the optical signal of the image optical signal to the first coupling-in grating region, where ones of the optical signal having a same emission position have a same diffraction angle. In this way, in the near-eye display system and the AR glasses provided in the embodiments of the present application, the configuration of the metalens assembly reduces the volume and weight of the lens, thereby reducing the size and weight of the optical engine module and also meeting the design requirements for high image quality and a large field of view.

### Brief Description of the Drawings

To describe the technical solutions in the embodiments of the present application more clearly, the accompanying drawings required for describing the embodiments are briefly introduced below. Apparently, the accompanying drawings in the following description show merely some embodiments of the present application, and those skilled in the art may derive other drawings from these accompanying drawings without involving any inventive effort.
FIG. 1 is a schematic modular diagram of an implementation of a near-eye display system according to an embodiment of the present application;
FIG. 2 is a schematic structural diagram of an implementation of the near-eye display system according to an embodiment of the present application;
FIG. 3 is a schematic structural diagram of a metalens module of the near-eye display system according to an embodiment of the present application;
FIG. 4 is a schematic structural diagram of another implementation of the near-eye display system according to an embodiment of the present application;
FIG. 5 is another schematic structural diagram of the metalens module of the near-eye display system according to an embodiment of the present application;
FIG. 6 is a schematic structural diagram of a nanopillar of the near-eye display system according to an embodiment of the present application;
FIG. 7 is a schematic structural enlarged view of a surface of the metalens module of the near-eye display system according to an embodiment of the present application;
FIG. 8 is a schematic structural diagram of another implementation of the near-eye display system according to an embodiment of the present application;
FIG. 9 is a schematic structural diagram of an optical path of an implementation of the near-eye display system according to an embodiment of the present application;
FIG. 10 is a schematic structural diagram of an optical path of an implementation of the near-eye display system according to an embodiment of the present application;
FIG. 11 is a schematic modular diagram of an implementation of a pair of AR glasses according to an embodiment of the present application; and
FIG. 12 is a schematic structural diagram of an implementation of the AR glasses according to an embodiment of the present application.

### List of reference signs:

1. Near-eye display system; 10. Optical waveguide module; 11. First waveguide plate; 111. First coupling-in grating region; 112. First coupling-out grating region; 121. Second coupling-in grating region; 122. Second coupling-out grating region; 20. Optical engine module; 21. Light source assembly; 22. Metalens assembly; 221. Substrate; 222. Metasurface structure; 2221. Metasurface unit group; 2222. Metasurface unit; 2223. Nanopillar; 23. Metalens; 24. Unit lens; 30. Exit pupil position; 2. Frame module; 21. Frame assembly; 22. Temple assembly; 3. AR glasses; 4. Near-eye lens module.

### Detailed Description of Embodiments

The technical solutions in the embodiments of the present application will be described below with reference to the accompanying drawings in the embodiments of the present application. It is clear that the embodiments described are some, rather than all, of the embodiments of the present application. Based on the embodiments of the present application, other embodiments obtained by those of ordinary skill in the art without involving any inventive effort shall fall within the scope of protection of the present application. The flowcharts shown in the accompanying drawings are merely examples for description, but do not necessarily include all content or operations/steps, and the operations/steps are not necessarily performed in the order described. For example, some operations/steps may alternatively be split, combined, or partially combined, and therefore an actual order of execution may change depending on an actual situation. The foregoing descriptions are merely specific embodiments of the present application, and are not intended to limit the scope of protection of the present application. Any equivalent modifications or substitutions readily figured out by a person skilled in the art within the technical scope disclosed in the present application shall fall within the scope of protection of the present application. Therefore, the scope of protection of the present application shall be subject to the scope of protection of the claims.

Some implementations of the present application will be described in detail below with reference to the accompanying drawings. In the case of no conflict, the following embodiments and features in the embodiments may be combined with each other.

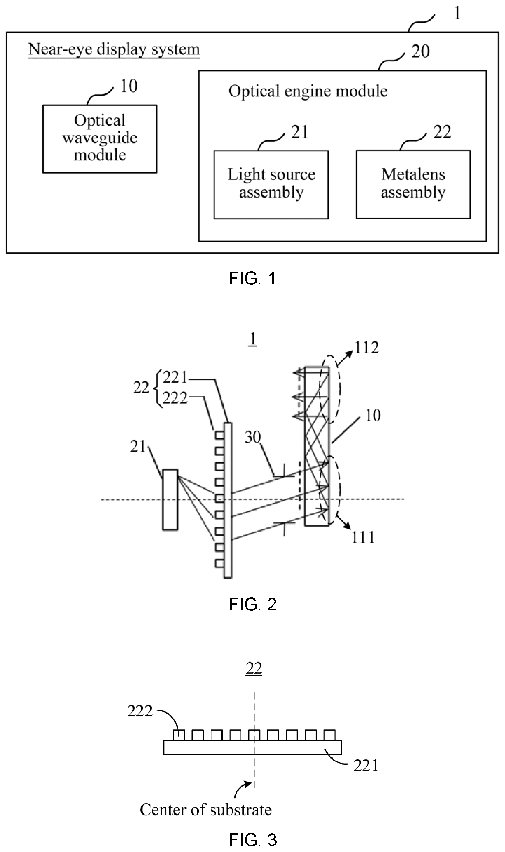

Referring to FIGS. 1 to 3, FIG. 1 is a schematic modular diagram of an implementation of a near-eye display system according to an embodiment of the present application, FIG. 2 is a schematic structural diagram of an implementation of the near-eye display system according to an embodiment of the present application, and FIG. 3 is a schematic structural diagram of a metalens module of the near-eye display system according to an embodiment of the present application.

As shown in FIGS. 1 to 3, an embodiment of the present application provides a near-eye display system 1 including an optical waveguide module 10 and an optical engine module 20. The structures of parts of the near-eye display system 11 are described in detail below.

Specifically, the optical waveguide module 10 has a first coupling-in grating region 111 and a first coupling-out grating region 112. The optical waveguide module 10 is configured to receive an optical signal through the first coupling-in grating region 111, transmit the received optical signal to the first coupling-out grating region 112, and emit the optical signal from the first coupling-out grating region 112. The first coupling-in grating region 111 and the first coupling-out grating region 112 may be located on the same side of the optical waveguide module 10 or on opposite sides of the optical waveguide module 10.

Specifically, the optical engine module 20 includes a light source assembly 21 disposed opposite the first coupling-in grating region 111, and a metalens assembly 22 disposed between the light source assembly 21 and the optical waveguide module 10. The light source assembly 21 is configured to output an image optical signal to the metalens assembly 22, the image optical signal including at least two types of optical signals having different attributes, and the attributes of the optical signal including at least one of a wavelength, an emission angle or an emission position.

As shown in FIG. 2, it should be noted that the image optical signal includes optical signals of different attributes. The optical signals of different attributes may have different emission angles, different emission positions, or different wavelengths, for example, RGB light, that is, three primary colors (red, green and blue) of light, with different wavelength ranges. The light source assembly 21 has a light output port. The light source assembly 21 is configured to emit an image optical signal from the light output port. The emission angle of the optical signal refers to an angle at which the optical signal is emitted from the light output port, and the emission position of the optical signal refers to a position at which the optical signal is emitted from the light output port.

Specifically, the metalens assembly 22 includes at least a substrate 221 and a metasurface structure 222 disposed on the substrate 221. The substrate 221 is light-transmitting. The metasurface structure 222 is configured to receive an image optical signal and diffract the optical signal of the image optical signal to the first coupling-in grating region 111. Ones of the optical signal having a same emission position have a same diffraction angle.

As shown in FIG. 2, it should be understood that for the optical signals in the image optical signal, when two optical signals have the same emission position on the light source assembly 21, even if the two optical signals have different wavelengths and/or different emission angles, the two optical signals will still be emitted at the same diffraction angle from the metasurface structure 222 of the metalens assembly 22, that is, the optical paths of the two optical signals emitted by the metalens assembly 22 are parallel to each other.

It should be additionally noted that the features such as "the same diffraction angle", "the optical paths being parallel" and "parallel to each other" mentioned in the embodiments of the present application are all intended to indicate that two optical signals with the same emission position on the light source assembly 21 have the same emission direction after passing through the metalens assembly 22. However, in the actual near-eye display system 1, due to the errors inherent in the optical products themselves, the diffraction angles of the two optical signals with the same emission position on the light source assembly 21 may have a certain deviation. It should be understood that considering the deviation in diffraction angle, two optical signals with the same emission position on the light source assembly 21 may not be absolutely parallel after passing through the metalens assembly 22, but may be approximately parallel. This is also within the scope of protection of the present application.

On this basis, in some implementations, when the two optical signals have the same emission position on the light source assembly 21, the diffraction angles of the two optical signals after passing through the metalens assembly 22 have an error range of ± 3 degrees.

It should be noted that in the near-eye display system 1 provided in the present application, a propagation path of the image optical signal output by the light source assembly 21 is specifically as follows: starting from the light source assembly 21, the image optical signal first reaches the metalens assembly 22, is then diffracted to the first coupling-in grating region 111 of the optical waveguide module 10 by means of the metasurface structure 222 of the metalens assembly 22 and then transmitted to the first coupling-out grating region 112 by means of the optical waveguide module 10, and is emitted from the first coupling-out grating region 112 to the eyeball of a target subject for imaging. The target subject refers to a subject using the near-eye display system 1. For example, when the near-eye display system 1 is mounted on the AR glasses 3, the target subject refers to a wearer of the AR glasses 3.

Compared with the bulky lens group design of an optical engine in a conventional near-eye display product, in the near-eye display system 1 provided in the embodiments of the present application, the metalens assembly 22 is provided to function as the lens group (e.g., including a plurality of concave lenses, convex lenses, etc.) in the conventional near-eye display product and reduce the volume and weight of a lens of the near-eye display system 1, thereby reducing the size and weight of the optical engine module 20 and also meeting the design requirements for high image quality and a large field of view.

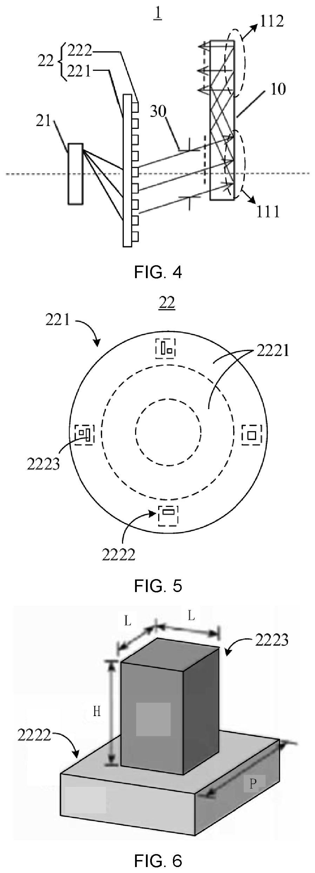

Referring to FIG. 4, FIG. 4 is a schematic structural diagram of another implementation of the near-eye display system according to an embodiment of the present application.

As shown in FIGS. 2 and 4, for the metalens assembly 22, it should be noted that the metasurface structure 222 may be disposed on a side of the substrate 221 close to the light source assembly 21 as shown in FIG. 2, or may be disposed on a side of the substrate 221 close to the optical waveguide module 10 as shown in FIG. 4. Both of the above configurations can also receive the image optical signal and diffract the optical signal of the image optical signal to the first coupling-in grating region 111, so that ones of the optical signal having a same emission position have a same diffraction angle.

As shown in FIGS. 2 and 4, in some implementations, the near-eye display system 1 has an exit pupil position 30, the exit pupil position 30 is located opposite the first coupling-in grating region 111, and the metasurface structure 222 is configured to diffract the optical signal through the exit pupil position 30 to the first coupling-in grating region 111.

Specifically, the near-eye display system 1 provided in the present application has an exit pupil position 30, the exit pupil position 30 is located between the metalens assembly 22 and the first coupling-in grating region 111 and is located opposite the first coupling-in grating region 111, and the optical signal diffracted by the metasurface structure 222 reaches the first coupling-in grating region 111 through the exit pupil position 30.

Referring to FIG. 5, FIG. 5 is another schematic structural diagram of the metalens module of the near-eye display system according to an embodiment of the present application.

As shown in FIGS. 3 and 5, in some implementations, the metasurface structure 222 includes a plurality of metasurface unit groups 2221, and the plurality of metasurface unit groups 2221 are arranged periodically outward from a center of the substrate 221.

Specifically, the center of the substrate 221 refers to the center of the substrate 221 in its two-dimensional plane extension direction, the metasurface structure 222 on the substrate 221 may be divided into a plurality of metasurface unit groups 2221, the region corresponding to a single metasurface unit group 2221 may be in the shape of a ring, a regular square, a regular hexagon, a sector, etc. around the center of the substrate 221, and the distance between any two adjacent metasurface unit groups 2221 in a radial direction of the center of the substrate 221 is fixed, so that the plurality of metasurface unit groups 2221 are arranged periodically outward from the center of the substrate 221. For example, when the corresponding region of a single metasurface unit group 2221 is in the shape of a ring around the center of the substrate 221, the radii of the plurality of metasurface unit groups 2221 relative to the center of the substrate 221 increase sequentially.

As shown in FIG. 5, in some implementations, the metasurface unit group 2221 includes a plurality of metasurface units 2222 arranged in a ring around the center of the substrate 221.

Specifically, the region corresponding to a single metasurface unit group 2221 is in the shape of a ring around the center of the substrate 221, the metasurface unit group 2221 includes a plurality of metasurface units 2222 arranged in a ring around the center of the substrate 221, and the plurality of metasurface units 2222 of the metasurface unit group 2221 are evenly arranged.

Referring to FIG. 6, FIG. 6 is a schematic structural diagram of a nanopillar of the near-eye display system according to an embodiment of the present application.

As shown in FIG. 6, in some implementations, the metasurface unit 2222 includes at least one nanopillar 2223 protruding from a side of the substrate 221 facing the light source assembly 21 or from a side thereof facing the optical waveguide module 10, the nanopillars 2223 on the substrate 221 protruding in the same direction. The nanopillar 2223 is configured to diffract the optical signal incident on the nanopillar 2223 to the first coupling-in grating region 111.

Specifically, the metasurface unit 2222 refers to the nanopillar 2223 disposed on the surface of the substrate 221. It should be understood that, in the embodiments of the present application, the nanopillars 2223 refer to nano-sized columnar protrusions, the nanopillars 2223 extend from the substrate 221 toward the side facing the light source assembly 21 or toward the side facing the optical waveguide module 10, and the nanopillars 2223 of all metasurface units 2222 on the substrate 221 all protrude toward the side facing the light source assembly 21 or toward the side facing the optical waveguide module 10.

It should also be noted that the nanopillars 2223 are configured to diffract the optical signals incident on the nanopillars 2223 to the first coupling-in grating region 111, and the nanopillars 2223 on the substrate 221 are configured to perform corresponding phase compensation for the optical signals of different attributes, so that ones of the optical signal having a same emission position (the emission angle and wavelength are not necessarily the same) are emitted at the same diffraction angle, so as to function as the lens group in the conventional near-eye display product and reduce the volume and weight of the lens of the near-eye display system 1, thereby reducing the size and weight of the optical engine module 20 and also meeting the design requirements for high image quality and a large field of view.

As shown in FIG. 6, in some implementations, a height H of the nanopillar 2223 protruding in a first direction meets: $H > {λ}_{0} / \left({n}_{1}-{n}_{2}\right)$ where λ₀ represents a wavelength of the optical signal incident on the nanopillar 2223, n₁ represents a refractive index of a material of the nanopillar 2223, and n₂ represents a refractive index of air. For example, when the material of the nanopillar 2223 is silicon, n₁ represents a refractive index of the corresponding material.

It should be noted that the first direction is perpendicular to the two-dimensional plane extension direction of the substrate 221, that is, a normal direction of the substrate 221.

It should also be noted that the material of the substrate 221 includes, but is not limited to, fused silica, quartz glass, crown glass, flint glass, sapphire, crystalline silicon, amorphous silicon, hydrogenated amorphous silicon, etc. The material of the nanostructure may be the same as or different from the material of the planar substrate 221. For example, the material of the nanostructure includes silicon oxide, silicon nitride, aluminum oxide, gallium nitride, titanium oxide, amorphous silicon, etc.

In some implementations, a diameter D and height H of the nanopillar 2223 meet: D > 60 nm, 300 nm < H < 3 um, and H/D < 20. It should be noted that in this implementation, the nanopillar 2223 is a cylindrical protrusion.

As shown in FIG. 6, in some other implementations, the nanopillar 2223 is a cubic columnar protrusion, the nanopillar 2223 has a dimension L of including a length and a width of the cross-section of the nanopillar 2223 that both meet the limitation of being greater than 60 nm, the nanopillar 2223 has a height meeting the limitation of being greater than 300 nm and less than 3 um, and a ratio of the height of the nanopillar 2223 to the dimension L (length and width) of the nanopillar 2223 is less than 20.

The numerical limitation for the dimension L and the height H of the nanopillar 2223 can maintain the mechanical forming properties of the metalens assembly 22 while ensuring the optical performance of the metalens assembly 22, thereby reducing the risk of damage or deformation of the metalens assembly 22.

In some implementations, the metasurface unit 2222 is rectangular, and the metasurface unit 2222 has a dimension P of including a length and a width both greater than 100 nm and less than 3000 nm.

Specifically, the limitations for the shape and for the range of the dimension P of the single metasurface unit 2222 are conducive to controlling the density of metasurface units 2222 on the substrate 221 and ensuring that the adjacent metasurface units 2222 are evenly arranged.

In some implementations, when setting the parameters of the dimension L and the height H of the nanopillar 2223 and the dimension P of the metasurface unit 2222, the parameters are made to meet the following requirements: for the target wavelength of each type of optical signals in the image optical signal, the height H of the nanopillar 2223 and the dimension P of the metasurface unit 2222 are determined such that the height of the nanopillar 2223 meets: $H > {λ}_{0} / \left({n}_{1}-{n}_{2}\right)$ where λ₀ represents a wavelength of the optical signal incident on the nanopillar 2223, n₁ represents a refractive index of a material of the nanopillar 2223, and n₂ represents a refractive index of air. For example, when the material of the nanopillar 2223 is silicon, n₁ represents a refractive index of the corresponding material.

After the height H of the nanopillar 2223 and the dimension P of the metasurface unit 2222 are determined, the dimension L of the nanopillar 2223 is changed to make a transmission amplitude T of the nanopillar 2223 approach 1, so that a transmission phase φ of the nanopillar 2223 covers (0, 2π). On this basis, the transmission amplitude T and phase are simulated and calculated, and the calculation form of the figure of merit FOM is defined as follows: $FOM = {\left|{Te}^{iφ}-{e}^{{iφ}_{0}}\right|}^{2}$ after this, the dimension L of the nanopillar 2223 is adjusted to the minimum value of the figure of merit FOM, at which point the target dimension parameters can be obtained.

The parameters of the dimension L and the height H of the nanopillar 2223 and the dimension P of the metasurface unit 2222 are set by the above method to ensure the small size and good optical performance of the metalens assembly 22.

As shown in FIG. 2, in some implementations, the optical waveguide module 10 is configured as a single-layer waveguide lens, and the first coupling-in grating region 111 and the first coupling-out grating region 112 are both disposed in the single-layer waveguide lens. The single-layer waveguide lens is configured to receive an optical signal through the first coupling-in grating region 111, transmit the received optical signal to the first coupling-out grating region 112, and emit the optical signal from the first coupling-out grating region 112.

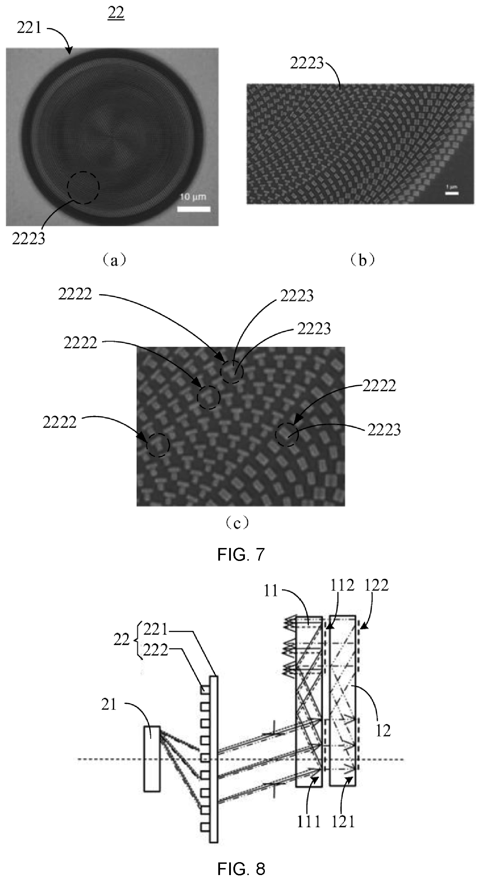

Referring to FIG. 7, FIG. 7 is a schematic structural enlarged view of a surface of the metalens module of the near-eye display system according to an embodiment of the present application. Specifically, FIGS. 7(a), 7(b) and 7(c) are schematic structural diagrams of the surface of the metalens module under different magnifications, with FIG. 7(c) having the maximum magnification and FIG. 7(a) having the minimum magnification.

As shown in FIGS. 5, 7(a), 7(b) and 7(c), the metasurface structure 222 includes a plurality of metasurface units 2222 arranged in a ring around the center of the substrate 221, and each metasurface unit 2222 includes a predetermined number of (for example, one or two) nanopillars 2223.

It should be noted that comparing FIG. 5 with FIGS. 7(a), 7(b) and 7(c), only some of the metasurface units 2222 and nanopillars 2223 are shown in FIG. 5, which aims to illustrate the positional and inclusion relationships of the substrate 221, the metasurface unit group 2221, the metasurface units 2222 and the nanopillars 2223, but does not constitute a specific limitation on the number of the above units.

It should be additionally noted that the features such as "the same diffraction angle", "the optical paths being parallel" and "parallel to each other" mentioned in the embodiments of the present application are all intended to indicate that two optical signals with the same emission position on the light source assembly 21 have the same emission direction after passing through the metalens assembly 22. However, in the actual near-eye display system 1, due to the errors inherent in the optical products themselves, the diffraction angles of the two optical signals with the same emission position on the light source assembly 21 may have a certain deviation. It should be understood that considering the deviation in diffraction angle, two optical signals with the same emission position on the light source assembly 21 may not be absolutely parallel after passing through the metalens assembly 22, but may be approximately parallel. This is also within the scope of protection of the present application.

On this basis, in some implementations, when the two optical signals have the same emission position on the light source assembly 21, the diffraction angles of the two optical signals after passing through the metalens assembly 22 have an error range of ± 3 degrees.

Referring to FIG. 8, FIG. 8 is a schematic structural diagram of another implementation of the near-eye display system according to an embodiment of the present application;.

As shown in FIG. 8, in some other implementations, the optical waveguide module 10 is configured as at least two layers of waveguide lenses. Specifically, the optical waveguide module 10 includes at least a first waveguide plate 11 and a second waveguide plate disposed on a side of the first waveguide plate 11 away from the metalens assembly 22.

It should be noted that the image optical signal includes at least a first type of optical signals and a second type of optical signals, and the first type of optical signals and the second type of optical signals have different wavelengths. The optical waveguide module 10 includes at least a first waveguide plate 11 and a second waveguide plate disposed on the side of the first waveguide plate 11 away from the metalens assembly 22. The first coupling-in grating region 111 and the first coupling-out grating region 112 are disposed in the first waveguide plate 11, and the second waveguide plate is provided with a second coupling-in grating region 121 and a second coupling-out grating region 122.

The first waveguide plate 11 is configured to transmit the first type of optical signals incident on the first coupling-in grating region 111 to the first coupling-out grating region 112, and diffract the second type of optical signals incident on the first coupling-in grating region 111 to the second coupling-in grating region 121; and the second waveguide plate is configured to transmit the second type of optical signals incident on the second coupling-in grating region 121 to the second coupling-out grating region 122, and diffract the optical signals from the second coupling-out grating region 122 to the first coupling-out grating region 112, so that the first type of optical signals and the second type of optical signals are combined in the first coupling-out grating region 112.

Specifically, the propagation path of the first type of optical signals in the optical waveguide module 10 is as follows: the first type of optical signals enter the first waveguide plate 11 from the first coupling-in grating region 111 and propagate to the first coupling-out grating region 112 via the first waveguide plate 11.

The propagation path of the second type of optical signals in the optical waveguide module 10 is as follows: the second type of optical signals enter the first waveguide plate 11 from the first coupling-in grating region 111, are diffracted via the first coupling-in grating region 111 to the second coupling-in grating region 121 and enter the second waveguide plate, then propagate via the second waveguide plate to the second coupling-out grating region 122, and are then diffracted via the second coupling-out grating region 122 to the first coupling-out grating region 112. The first type of optical signals and the second type of optical signals are combined in the first coupling-out grating region 112 and emitted from the first coupling-out grating region 112 to propagate to the field of view of the target subject.

It should be understood that optical signals of different wavelengths correspond to different colors (e.g., RGB), and the provision of different waveguide plates for propagation of optical signals of different wavelengths can avoid the occurrence of dispersion due to different diffraction angles when the optical signals of different wavelengths propagate in the same waveguide plate, thereby solving the problem of uneven color of the optical signals emitted from the first optical coupling-out region.

In some implementations, the wavelength of the first type of optical signals is less than the wavelength of the second type of optical signals, that is, the first waveguide plate 11 is configured to propagate optical signals of a relatively smaller wavelength.

In some implementations, the wavelength of the first type of optical signals is within a preset first wavelength range, the wavelength of the second type of optical signals is within a preset second wavelength range, and the maximum value of the first wavelength range is less than or equal to the minimum value of the second wavelength range.

For example, the first type of optical signals may be set to blue light with a relatively shorter wavelength, that is, the first waveguide plate 11 is configured to propagate blue light of a relatively shorter wavelength; The second type of optical signals are green light and red light of relatively longer wavelengths, that is, the first waveguide plate 11 is configured to propagate green light and red light of relatively longer wavelengths.

It should be noted that when the optical waveguide module 10 is configured as at least two layers of waveguide lenses, the first waveguide plate 11 and the second waveguide plate may be either bonded together or spaced apart.

As shown in FIG. 8, in some implementations, the first coupling-in grating region 111 and the second coupling-in grating region 121 are disposed opposite each other in a direction of thickness of the optical waveguide module 10, and the first coupling-out grating region 112 and the second coupling-out grating region 122 are disposed opposite each other in the direction of thickness of the optical waveguide module 10.

Specifically, the propagation path of the second type of optical signals in the optical waveguide module 10 may also be as follows: the second type of optical signals pass through the first waveguide plate 11 through the first coupling-in grating region 111, propagate to the second coupling-in grating region 121 and enter the second waveguide plate, then propagate to the second coupling-out grating region 122 via the second waveguide plate, and are then diffracted via the second coupling-out grating region 122 and pass through the first waveguide plate 11 again, and the second type of optical signals and the first type of optical signals are combined in the first coupling-out grating region 112 and are emitted.

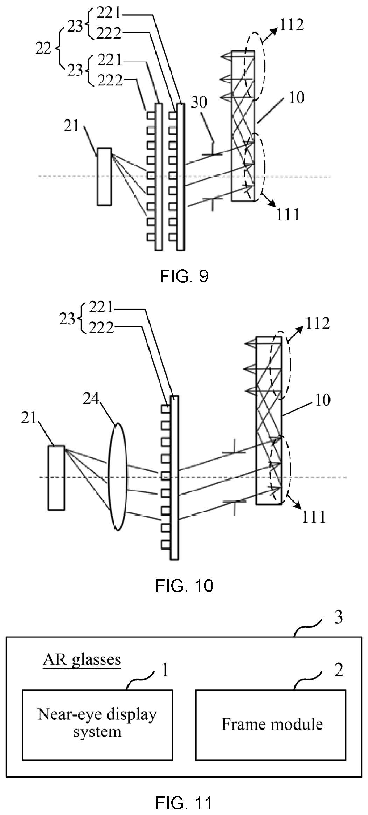

Referring to FIG. 9, FIG. 9 is a schematic structural diagram of an optical path of an implementation of the near-eye display system 1 according to an embodiment of the present application.

As shown in FIG. 9, in some implementations, the metalens assembly 22 includes at least one metalens 23. Each metalens 23 includes a substrate 221 and a corresponding metasurface structure 222, and the at least one metalens 23 is arranged separately between the light source assembly 21 and the optical waveguide module 10.

Specifically, the propagation path of the image optical signal is as follows: the image optical signal is emitted from the light source assembly 21, and then propagates sequentially through the metalenses 23 to the first coupling-in grating region 111 of the optical waveguide module 10. It should be noted that the metalens assembly 22 may include one metalens 23 (as shown in FIG. 2), may include two metalenses 23 (as shown in FIG. 9), or may have a greater number of metalenses 23.

It should be understood that, compared with the conventional near-eye display product that has a great number of lenses in the lens group, the provision of at least two metalenses 23 to replace the lens group reduces the number of lenses used, and can reduce the volume and weight of the lens while ensuring the design requirements for high image quality and a large field of view. The design solution in which the metalens assembly 22 includes two or three metalenses 23 can achieve better elimination of dispersion than the provision of only one metalens 23.

Referring to FIG. 10, FIG. 10 is a schematic structural diagram of an optical path of an implementation of the near-eye display system according to an embodiment of the present application.

As shown in FIG. 10, in some implementations, the near-eye display system 1 further includes at least one unit lens 24. The unit lens 24 includes, but is not limited to, a convex lens or a concave lens.

The at least one unit lens 24 and the at least one metalens 23 are arranged separately between the light source assembly 21 and the optical waveguide module 10.

Specifically, one unit lens 24 and one metalens 23 may be arranged separately between the light source assembly 21 and the optical waveguide module 10, as shown in FIG. 10. It should be understood that the number of unit lenses 24 and metalenses 23 can be adjusted according to the requirements for size of the optical engine module 20 and the design requirements for eliminating dispersion, so as to achieve a better balance between small size and good optical performance.

It should be noted that, in addition to directly replacing the entire lens group with the metalens assembly 22 composed of the metasurface lenses, at least one unit lens 24 and at least one metalens 23 may be provided in the optical path between the light source assembly 21 and the optical waveguide module 10, which also reduces the number of lenses used while being compatible with the conventional single lens and metalens 23, and can reduce the volume and weight of the lens while ensuring the design requirements for high image quality and a large field of view design. Moreover, compared with the provision of only one metalens 23, the combination of at least one unit lens 24 and at least one metalens 23 can achieve better elimination of dispersion.

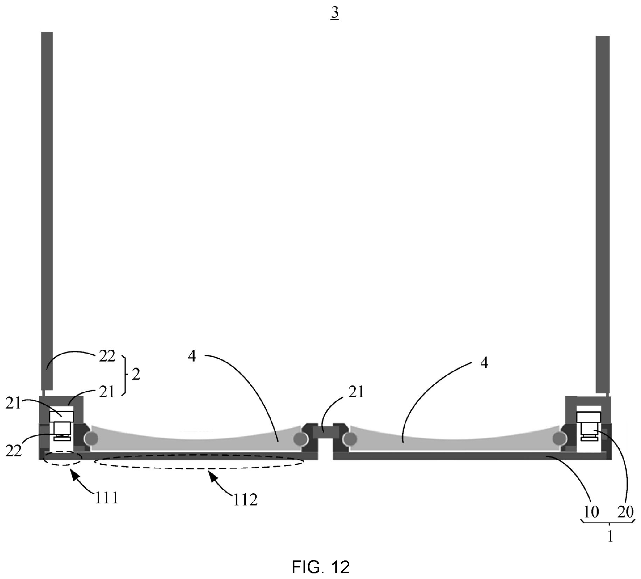

Referring to FIGS. 11 and 12, FIG. 11 is a schematic modular diagram of an implementation of a pair of AR glasses according to an embodiment of the present application, and FIG. 12 is a schematic structural diagram of an implementation of the AR glasses according to an embodiment of the present application.

As shown in FIGS. 11 and 12, the embodiments of the present application further provide a pair of AR glasses 3. The AR glasses 3 include a frame module 2 and a near-eye display system 1 according to any of the embodiments of the present application. The near-eye display system 1 is mounted to the frame module 2.

It should be understood that the frame module 2 is configured to provide wearing support for a target user. When the target user uses the AR glasses 3, the AR glasses can be worn by means of the frame module 2. On the other hand, the near-eye display system 1 according to any of the embodiments of the present application is mounted on the frame module 2 to emit an optical signal to the field of view of the target user.

As shown in FIGS. 2 and 12, specifically, the light source assembly 21 of the near-eye display system 1 outputs an image optical signal to the metalens assembly 22. The image optical signal includes at least two types of optical signals having different attributes. The attributes of the optical signal include at least one of a wavelength, an emission angle or an emission position. The metalens assembly 22 of the near-eye display system 1 is configured to receive the image optical signal and diffract the optical signal of the image optical signal to the first coupling-in grating region 111. Ones of the optical signal having a same emission position have a same diffraction angle. The optical waveguide module 10 is formed with the first coupling-in grating region 111 and the first coupling-out grating region 112. The optical waveguide module 10 is configured to receive an optical signal through the first coupling-in grating region 111, transmit the received optical signal to the first coupling-out grating region 112, and emit the optical signal from the first coupling-out grating region 112. When the target subject wears the near-eye display system 1, the field of view of the target subject is located opposite the first coupling-out grating region 112 of the optical waveguide module 10, and the optical signal emitted from the optical coupling-out region enters the field of view of the target subject to display a corresponding image.

Further, the AR glasses 3 further include a control assembly electrically connected to the light source assembly 21. The control assembly is configured to control an optical signal output of the optical engine to adjust the image displayed by the AR glasses 3 to the target subject.

In some implementations, the frame module 2 includes a frame assembly 21 and a temple assembly 22 connected to the frame assembly 21.

In the near-eye display system 1, the optical waveguide module 10 is mounted to the frame assembly 21, and the optical engine module 20 of the near-eye display system 1 is disposed on a side of the frame assembly 21 close to the temple assembly 22 and corresponding to the first coupling-in grating region 111 of the optical waveguide module 10.

Specifically, the light source assembly 21, the metalens assembly 22 and the optical waveguide module 10 are arranged in sequence in a direction from the temple assembly 22 toward the frame assembly 21, and the light source assembly 21 is configured to emit the image optical signal in the direction from the temple assembly 22 toward the frame assembly 21.

In some implementations, the near-eye display system 1 further includes a near-eye lens module 4. The near-eye lens module 4 is mounted to the frame assembly 21 and is disposed corresponding to the first coupling-out grating region 112 of the optical waveguide module 10.

Specifically, when the target subject wears the AR glasses 3, the optical signal emitted by the near-eye display system 1 from the first coupling-out grating region 112 of the optical waveguide module 10 passes through the near-eye lens module 4 and propagates to the field of view of the target subject.

In some implementations, the near-eye lens module 4 includes one of a refractive lens or a plano lens.

It should be noted that the refractive lens is configured to adjust the light that is input to the refractive lens to meet the user's need for vision correction. For example, when the user has a need for vision correction, the optical signal output by the near-eye display system 1 is directed to the refractive lens, while the light from the outside that is directed to the AR glasses 3 is transmitted through the optical waveguide module 10 and directed to the refractive lens, and all the optical signals directed to the refractive lens are corrected and propagate to the field of view of the target subject.

It should be understood that, when there is no need for vision correction, the refractive lens can be replaced with the plano lens, in which case the light from the outside and the optical signal output by the near-eye display system 1 overlay and pass through the plano lens into the field of view of the target subject.

In some implementations, the refractive lens is configured to have one plano side and the other concave side. When the refractive lens is configured to address the user's need for myopia correction, the plano side of the refractive lens faces the optical waveguide module 10, and the concave side of the refractive lens faces away from the optical waveguide module 10. This allows the dimension of the AR glasses 3 in the direction of thickness of the refractive lens to be further compressed, and also facilitates control of the distance between the refractive lens and the optical waveguide module 10 during a manufacturing process.

For example, as shown in FIG. 12, the near-eye lens module 4 includes a refractive lens configured to have one plano side and the other concave side, with the plano side of the refractive lens facing the optical waveguide module 10 and the concave side of the refractive lens facing away from the optical waveguide module 10.

In other implementations, the refractive lens is configured as a refractive lens with one concave side and the other convex side. When the refractive lens is configured to address the user's need for myopia correction, the convex side of the refractive lens faces the optical waveguide module 10, while the concave side of the refractive lens faces away from the optical waveguide module.

Further, the convex side of the refractive lens is relatively flat compared with the concave side of the refractive lens, that is, the flat surface of the refractive lens facing the optical waveguide module 10 exhibits a slight curvature.

In summary, the embodiments of the present application provide a near-eye display system 1 and a pair of AR glasses 3. The near-eye display system 1 includes: an optical waveguide module 10 having a first coupling-in grating region 111 and a first coupling-out grating region 112, the optical waveguide module 10 being configured to receive an optical signal through the first coupling-in grating region 111, transmit the received optical signal to the first coupling-out grating region 112, and emit the optical signal from the first coupling-out grating region 112; and an optical engine module 20, the optical engine module 20 including a light source assembly 21 disposed opposite the first coupling-in grating region 111, and a metalens assembly 22 disposed between the light source assembly 21 and the optical waveguide module 10, where the light source assembly 21 is configured to output an image optical signal to the metalens assembly 22, the image optical signal including at least two types of optical signals having different attributes, and the attributes of the optical signal including at least one of a wavelength, an emission angle or an emission position. The metalens assembly 22 includes at least a substrate 221 and a metasurface structure 222 disposed on the substrate 221, the metasurface structure 222 configured to receive the image optical signal and diffract the optical signal of the image optical signal to the first coupling-in grating region 111, where ones of the optical signal having a same emission position have a same diffraction angle. In this way, in the near-eye display system 1 and the AR glasses 3 provided in the embodiments of the present application, the configuration of the metalens assembly 22 reduces the volume and weight of the lens, thereby reducing the size and weight of the optical engine module 20 and also meeting the design requirements for high image quality and a large field of view.

Those of ordinary skill in the art can understand that all or some of the steps in the method and the functional modules/units in the system and apparatus disclosed above may be implemented as software, firmware, hardware, and appropriate combinations thereof. In a hardware embodiment, the division of the functional modules/units mentioned in the above description does not necessarily correspond to the division of physical assemblies. For example, one physical assembly may have multiple functions, or one function or step may be jointly performed by several physical assemblies. Some or all of the physical assemblies may be implemented as software executed by a processor such as a central processing unit, a digital signal processor, or a microprocessor, or may be implemented as hardware or a setting circuit such as an application-specific integrated circuit. Such software may be distributed on a computer-readable medium, which may include a computer storage medium (or non-transitory medium) and a communication medium (or a transitory medium).

It should be understood that terms used in this specification of the present application are only for the purpose of describing specific embodiments, and are not intended to limit the present application. Unless otherwise explicitly specified and defined, the terms such as "mounting", "connecting" and "connection" should be interpreted in a broad sense, for example, they may be a fixed connection, a detachable connection, or an integral connection; or may be a mechanical connection or an electrical connection; or may be a direct connection, an indirect connection by means of an intermediate medium, or internal communication between two elements. For those of ordinary skill in the art, the specific meaning of the terms mentioned above in the present application can be construed according to specific circumstances. As used in this specification and the appended claims of the present application, the singular forms "a", "an", and "the" are intended to include plural forms, unless otherwise explicitly specified in the context.

It should be further understood that the term "and/or" used in the specification and the appended claims of the present application indicates any combination and all possible combinations of one or more items listed in association, and includes the combinations. It should be noted that the term "comprise", "include", or any other variant thereof herein is intended to encompass a non-exclusive inclusion, such that a process, method, article, or system that includes a series of elements not only includes those elements, but also includes other elements not explicitly listed, or elements that are inherent to such a process, method, article, or system.

## Claims

1. A near-eye display system, **characterized by** comprising:
an optical waveguide module having a first coupling-in grating region and a first coupling-out grating region, the optical waveguide module being configured to receive an optical signal through the first coupling-in grating region, transmit the received optical signal to the first coupling-out grating region, and emit the optical signal from the first coupling-out grating region; and
an optical engine module comprising a light source assembly disposed opposite the first coupling-in grating region, and a metalens assembly disposed between the light source assembly and the optical waveguide module; wherein the light source assembly is configured to output an image optical signal to the metalens assembly, the image optical signal comprising at least two types of optical signals having different attributes, and the attributes of the optical signal comprising at least one of a wavelength, an emission angle or an emission position;
wherein the metalens assembly comprises a substrate and a metasurface structure disposed on the substrate, the metasurface structure is configured to receive the image optical signal and diffract the optical signal of the image optical signal to the first coupling-in grating region, ones of the optical signal having a same emission position have a same diffraction angle.

2. The near-eye display system according to claim 1, **characterized in that** the near-eye display system has an exit pupil position located opposite the first coupling-in grating region, and the metasurface structure is configured to diffract the optical signal through the exit pupil position to the first coupling-in grating region.

3. The near-eye display system according to claim 1, **characterized in that** the metasurface structure comprises a plurality of metasurface unit groups arranged periodically outward from a center of the substrate.

4. The near-eye display system according to claim 3, **characterized in that** each of the metasurface unit groups comprises a plurality of metasurface units arranged in a ring around the center of the substrate.

5. The near-eye display system according to claim 4, **characterized in that** each of the metasurface units comprises at least one nanopillar protruding from a side of the substrate facing the light source assembly or from a side of the substrate facing the optical waveguide module, the nanopillars on the substrate protruding in the same direction;
wherein the nanopillar is configured to diffract an optical signal incident on the nanopillar to the first coupling-in grating region.

6. The near-eye display system according to claim 5, **characterized in that** a height H of the nanopillar protruding in a first direction meets: $H > {λ}_{0} / \left({n}_{1}-{n}_{2}\right)$ wherein λ₀ is a wavelength of the optical signal incident on the nanopillar, n₁ is a refractive index of a material of the nanopillar, and n₂ is a refractive index of air, the first direction being perpendicular to an extension direction of the substrate.

7. The near-eye display system according to claim 5, **characterized in that** a diameter D and a height H of the nanopillar meet: D > 60 nm, 300 nm < H < 3 um, and H/D < 20.

8. The near-eye display system according to claim 4, **characterized in that** the metasurface unit is rectangular, and a length and a width of the metasurface unit are both greater than 100 nm and less than 3000 nm.

9. The near-eye display system according to any one of claims 1 to 8, **characterized in that** the image optical signal comprises a first type of optical signals and a second type of optical signals, the first type of optical signals having a different wavelength from the second type of optical signals; and
the optical waveguide module comprises at least a first waveguide plate and a second waveguide plate disposed on a side of the first waveguide plate away from the metalens assembly, the first coupling-in grating region and the first coupling-out grating region are disposed in the first waveguide plate, and the second waveguide plate is provided with a second coupling-in grating region and a second coupling-out grating region;
wherein the first waveguide plate is configured to transmit the first type of optical signals incident on the first coupling-in grating region to the first coupling-out grating region, and diffract the second type of optical signals incident on the first coupling-in grating region to the second coupling-in grating region; and
the second waveguide plate is configured to transmit the second type of optical signals incident on the second coupling-in grating region to the second coupling-out grating region, and diffract the optical signals from the second coupling-out grating region to the first coupling-out grating region, so that the first type of optical signals and the second type of optical signals are combined in the first coupling-out grating region.

10. The near-eye display system according to claim 9, **characterized in that** the first coupling-in grating region and the second coupling-in grating region are disposed opposite each other in a direction of thickness of the optical waveguide module, and the first coupling-out grating region and the second coupling-out grating region are disposed opposite each other in the direction of thickness of the optical waveguide module.

11. The near-eye display system according to any one of claims 1 to 8, **characterized in that** the metalens assembly comprises at least one metalens, wherein each metalens comprises the substrate and the corresponding metasurface structure, and the at least one metalens is arranged separately between the light source assembly and the optical waveguide module.

12. The near-eye display system according to claim 11, **characterized by** further comprising at least one unit lens, the unit lens comprising, a convex lens or a concave lens;
wherein the at least one unit lens and the at least one metalens are arranged separately between the light source assembly and the optical waveguide module.

13. A pair of AR glasses, **characterized by** comprising a frame module and a near-eye display system according to any one of claims 1 to 12, the near-eye display system being mounted to the frame module.

14. The AR glasses according to claim 13, **characterized in that** the frame module comprises a frame assembly and a temple assembly connected to the frame assembly;
wherein the optical waveguide module of the near-eye display system is mounted to the frame assembly, and the optical engine module of the near-eye display system is disposed on a side of the frame assembly close to the temple assembly and corresponding to the first coupling-in grating region of the optical waveguide module.

15. The AR glasses according to any one of claims 1 to 8, **characterized by** further comprising a near-eye lens module mounted to the frame assembly and disposed corresponding to the first coupling-out grating region of the optical waveguide module.

16. The AR glasses according to claim 13, **characterized in that** the near-eye lens module comprises a refractive lens or a plano lens.
